# EUROPEAN PATENT SPECIFICATION

(11) **EP 4 536 988 B1**
(45) Date of publication and mention of the grant of the patent: **17.06.2026**
(21) Application number: 23734750.5
(22) Date of filing: 13.06.2023
(51) Int. Cl.: F16D 65/00, F16D 65/095, F16D 55/00

(54) **BRAKE CALIPER BODY AND BRAKE CALIPER**
BREMSSATTELKÖRPER UND BREMSSATTEL
CORPS D'ÉTRIER DE FREIN ET ÉTRIER DE FREIN

(30) Priority: 13.06.2022 IT 202200012473
(43) Date of publication of application: 16.04.2025
(73) Proprietor: Brembo S.p.A., 24035 Curno (Bergamo) (IT)
(72) Inventor: ESPOSITO, Alessandro, 24035 Curno, BERGAMO (IT); MOZZATI, Alberto, 24035 Curno, BERGAMO (IT); FORLANI, Ernestino, 24035 Curno, BERGAMO (IT)
(74) Representative: Crippa, Paolo Ernesto
(86) International application number: PCT/IB2023/056068
(87) International publication number: WO 2023/242721

(56) References cited:
- EP-A1- 1 425 520
- EP-B1- 1 425 520
- WO-A1-2011/121553

## Description

### . Field of the invention

**.** The present invention relates to a caliper body, a brake caliper, a caliper body and caliper support assembly, as well as to a method of assembling a pad support pin in a caliper body.

### . Background art

**.** In a disc brake of known type, the brake caliper is generally arranged astride a brake disc mounted on the hub of a vehicle wheel. The brake caliper usually comprises a caliper body which accommodates the brake pads and actuators for pushing the pads against the disc to achieve the braking action on the vehicle.

**.** In some known disc brake types, the pads are supported by support pins accommodated in appropriate caliper body seats made in the caliper body, in which each support pin passes through corresponding holes made in the support plate for the friction material of each brake pad. Such support pins have a longitudinal extension axis, a pin head, and a pin tip arranged at the opposite ends of the extension axis.

**.** The support pins are coupled with clearance with respect to the respective caliper body seat, and therefore elastic elements are used to axially constrain the pins to the caliper body seats.

**.** In some cases, such elastic elements are coaxially preassembled to the pin body in an annular pin seat. The annular pin seat, in which the elastic element is accommodated, includes a usually cylindrical bottom wall with axial extension, axially delimited by at least a first seat wall substantially transverse to the bottom wall minus flared machining connectors.

**.** Such elastic elements are usually expanding elastic elements, and in a resting condition, have a larger radial dimension than the radial dimension of the first seat wall. When the support pin provided with the expanding elastic element is assembled to the caliper body, the expanding elastic element is thus radially compressed by the walls of the caliper body seat in the direction of the support pin, and the expanding elastic element is constrained by friction to the caliper body seat. As a result, the expanding elastic element provides an axial constraint aimed at preventing the pin from coming out of its seat.

**.** The expanding elastic element is inserted by sliding into the caliper body seat, e.g., under a thrust action. Once the expanding elastic element is positioned inside the caliper body seat, and at least one pin abutment portion of the support pin axially abuts against the caliper body defining the maximum insertion position of the pin in the caliper body, the elastic element forms an axial constraint with respect to the pin, thus preventing the movements of the pin in the extraction direction until the action in the axial direction applied by the first seat wall of the pin seat exceeds the static friction force between the elastic element and the caliper body, allowing the elastic element to slide with respect to the caliper body and therefore allowing the pin to come out of its seat.

. For example, document EP1425520 to the Applicant shows a brake pad support pin coupled to a barrel-shaped expanding elastic element.The following document can also be cited as further prior art : WO 2011/121553 A1.

**.** The shape of the support pins and the respective expanding elastic elements is such as to meet the need to ensure an easy assembly of a brake caliper assembly, as well as a simple replacement of the brake pads, e.g., during maintenance, while meeting the need to ensure an axially constrained coupling between the support pins and the caliper body when the vehicle is used, while withstanding the operating biases.

**.** According to a further aspect, in order to ensure the correct axial positioning of the support pin and elastic element assembly, the pad support pins of known type are machined to have a pin abutment portion which, when the support pin has reached its maximum axial insertion position, axially abuts against the caliper body, and the expanding elastic element, forming a radial seal with the caliper body, prevents the unwanted release of the support pin from the caliper body.

**.** The pad support pins are machined in different manners to obtain different pin abutment portions according to the type of caliper body on which they must be mounted, e.g., on monobloc caliper bodies or on caliper bodies having two caliper half-bodies assembled together. Consistently, the caliper body seats in which the pin tip and the pin head are accommodated, respectively, have different shapes according to the type of caliper body.

**.** Some types of pad support pins have, at the pin tip end, a pin abutment portion, i.e., a shoulder, having a larger radial dimension than a pin tip end portion with small diameter, so that it abuts against the caliper body when the pin is inserted into the caliper body, reaching its maximum axial insertion position.

**.** In other types of pad support pins, the pin portion in which the annular seat is obtained, in which the elastic element is arranged, has a larger radial dimension than the rest of the pin and thus has, in the direction of the pin tip, a pin fitting shoulder shaped to abut against a caliper body seat shoulder so that it abuts against the caliper body when the pin is inserted into the caliper body, reaching its maximum axial insertion position. In such a case, the caliper body seat accommodating the pin portion in which the annular seat is obtained usually comprises a first cylindrical portion and a second cylindrical portion having different diameters, which are connected by the shoulder of the caliper body seat.

**.** Although such pad support pins and the corresponding elastic elements meet the needs of obtaining simple assembly and easy maintenance, it has been found that the mechanical operations for defining the pin abutment portions make the manufacturing of the support pins particularly complex and have a significant impact on the final cost and processing time.

**.** Therefore, the need is strongly felt in the field to make pad support pins which are easy to manufacture and which allow reducing the production costs per piece, while allowing the standardization of the geometry of the pins for different types of calipers, thus further facilitating the processes of assembling such assemblies in respective caliper bodies.

**.** Therefore, the problem underlying the present invention is to devise a caliper body, pin and elastic element assembly, as well as a brake caliper, a pin assembly, a caliper body, and a method for assembling a pad support pin in a caliper body of a vehicle, which have structural and functional features to meet the aforesaid needs while solving the drawbacks mentioned with reference to the prior art and meet the aforesaid needs.

### . Solution

**.** It is the object of the present invention to provide a caliper body, as well as a brake caliper, as well as a caliper and caliper support assembly, as well as a method of assembling a pad support pin in a caliper body of a vehicle, which are easy to manufacture and obtain while allowing easy maintenance and assembly, as well as the highest certainty for the pin not to accidentally come out of its seat when using the brake caliper.

**.** This and other objects and advantages are achieved by a caliper body according to claim **1,** as well as a brake caliper according to claim **9,** as well as an assembly according to claim **8,** as well as a caliper body according to claim **20,** as well as a method of mounting a pad support pin in a caliper body of a vehicle according to claim **21.**

**.** Some advantageous embodiments are the subject of the dependent claims.

**.** The analysis of this solution shows how the suggested solution allows simplifying the machining of the support pins while maintaining an easy, correct positioning of the support pin inside the caliper body.

**.** Moreover, the suggested solution reduces manufacturing costs by reducing the pin portions which must be machined after drawing.

**.** Furthermore, the suggested solutions allow standardizing the different types of pins and the different types of pin seats made in the caliper body, further reducing manufacturing costs and simplifying the assembly operations.

**.** Moreover, the suggested solutions allow ensuring the highest certainty for the pin not to be accidentally removed from its seat during use.

### . Drawings

**.** Further features and advantages of the caliper body, brake caliper, assembly and assembly method are given by way of a nonlimiting example, with reference to the accompanying drawings, in which:

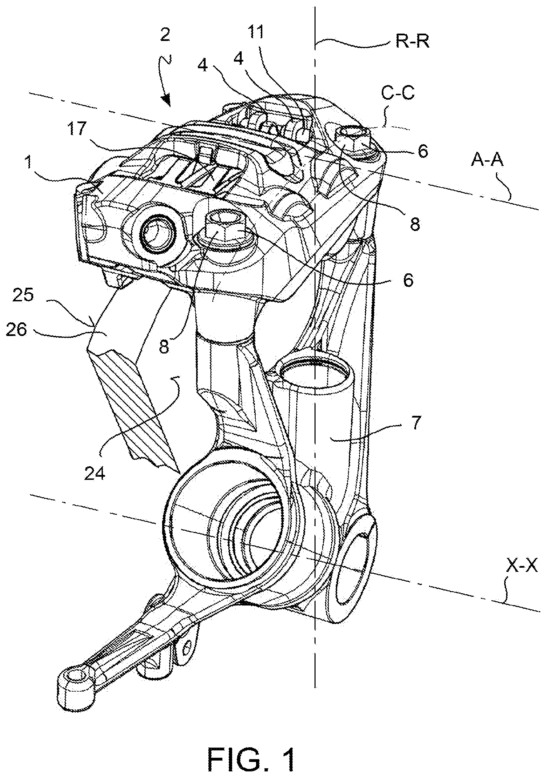

- Figure 1 shows an axonometric view of a brake caliper mounted on a caliper support;

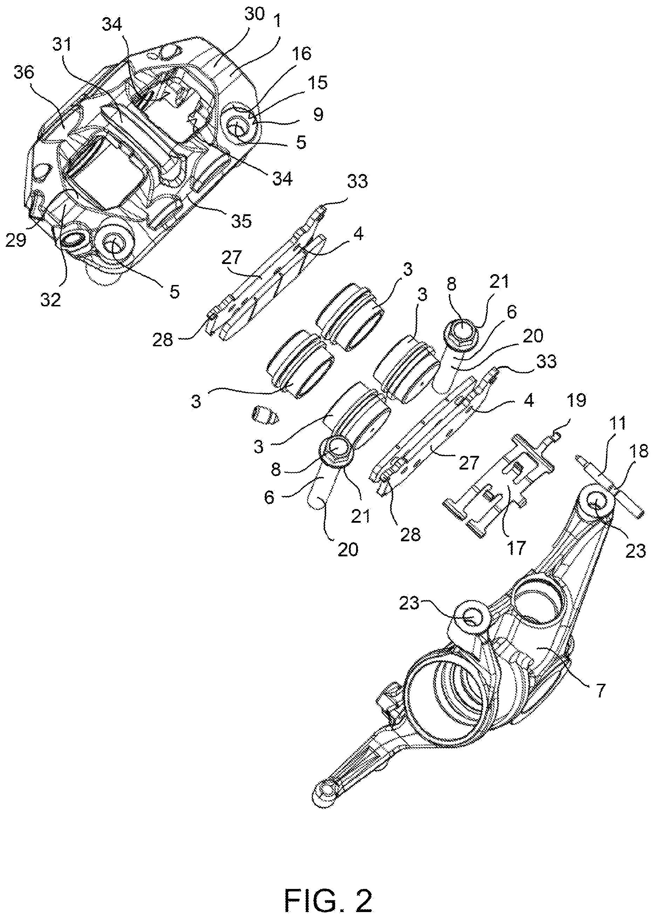

- Figure 2 shows an axonometric view, in separate parts, of the assembly in Figure 1;

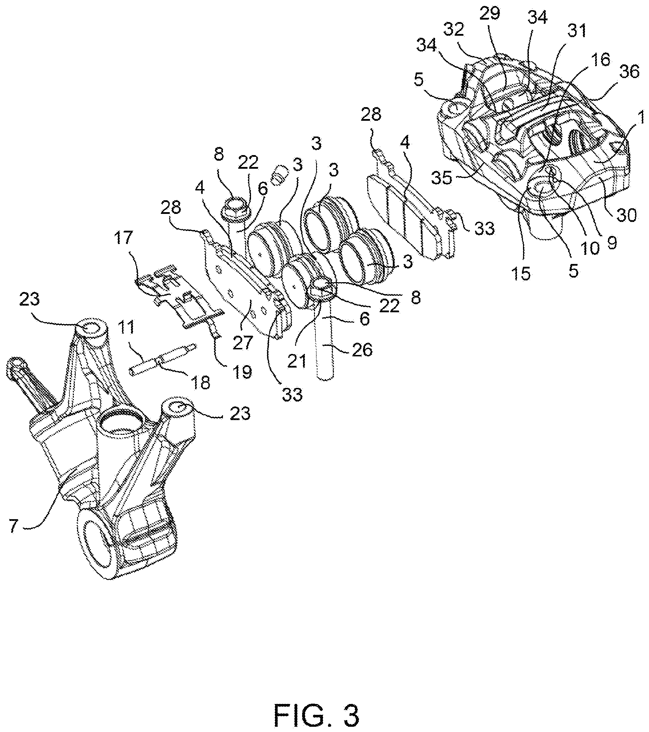

- Figure 3 shows an axonometric view, in separate parts, of the assembly in Figure 1, according to a different point of view;

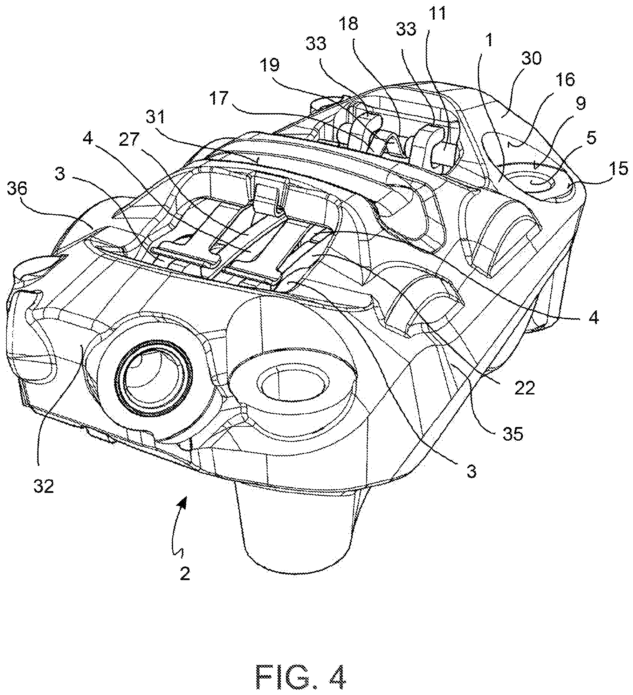

- Figure 4 shows an axonometric view of a brake caliper according to the invention;
- Figure 5 shows an axonometric view of a caliper body according to the invention;
- Figure 6 shows a front view of the caliper body in Figure 5;

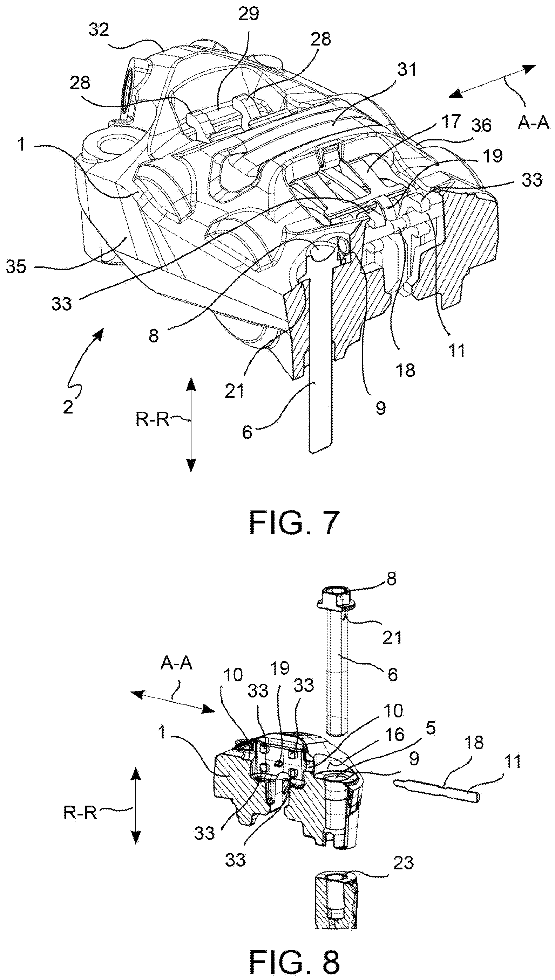

- Figure 7 shows an axonometric view sectioned by a plane directed according to the radial and axial direction passing through the pin seat, of the brake caliper in Figure 4 in which a connecting screw is mounted;
- Figure 8 shows an axonometric view, sectioned by a plane directed according to the radial and axial direction passing through the pin seat, of the brake caliper in Figure 4 in which the connecting screw is removed from its seat and the pin is removed from its seat;

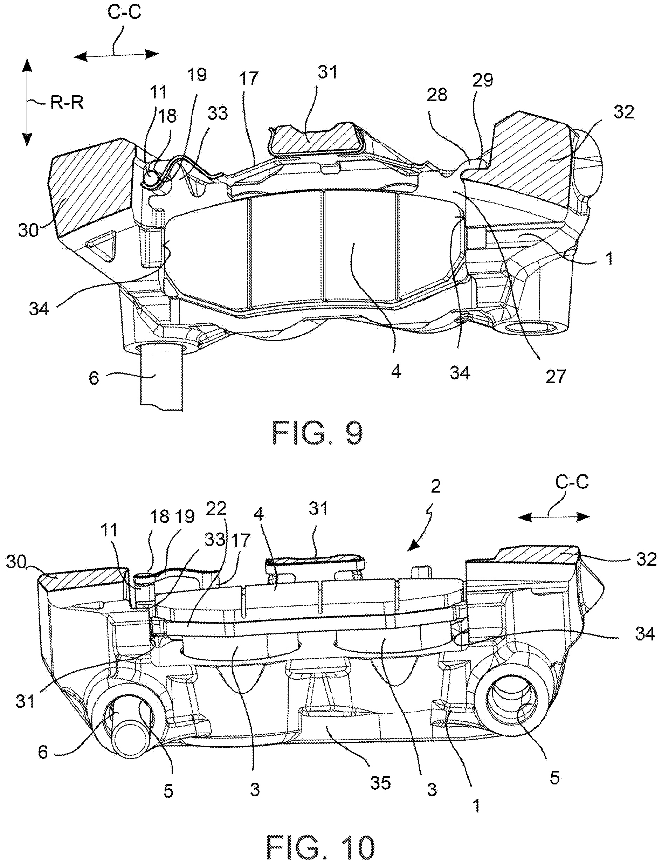

- Figure 9 shows an axonometric view, sectioned by a plane passing through the circumferential and radial direction, of the caliper in Figure 4 in which a connecting screw is inserted;
   Figure 10 shows an axonometric view, sectioned by a plane passing through the circumferential and radial direction, of the caliper in Figure 4 in which a connecting screw is inserted, according to a different point of view;

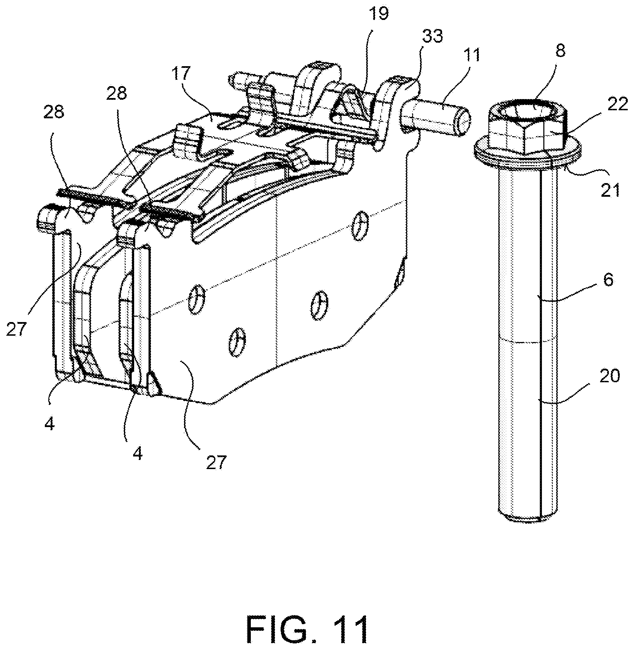

- Figure 11 shows an axonometric view of the assembly of the brake pads, pad spring, brake-pad sliding and support pin and connecting screw depicted in operating position;

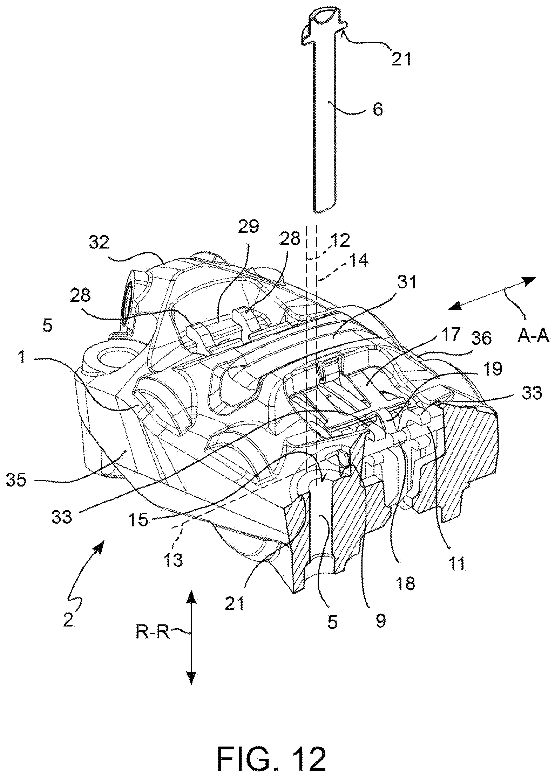

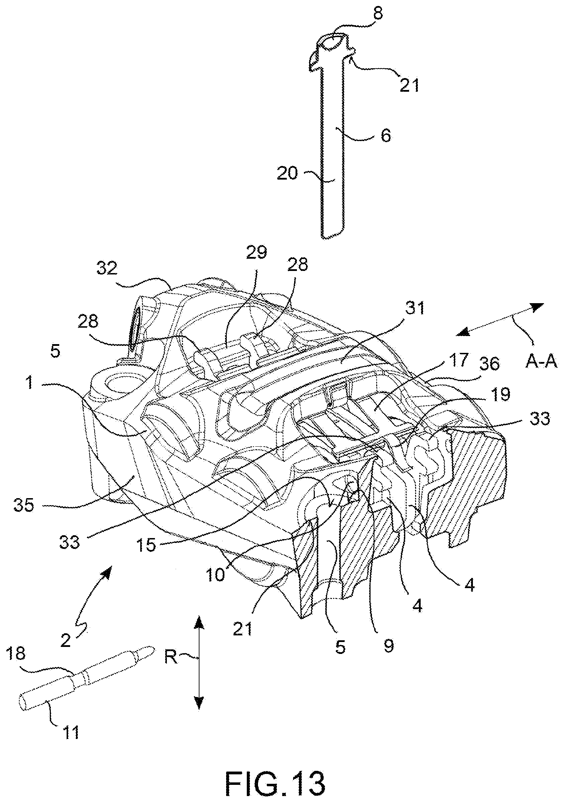

- Figures 12 and 13 show an axonometric view of the caliper in Figure 4, sectioned according to a plane passing through the radial and axial direction in which two pin disassembly steps are depicted, first removing the connecting screw and then removing the pin;

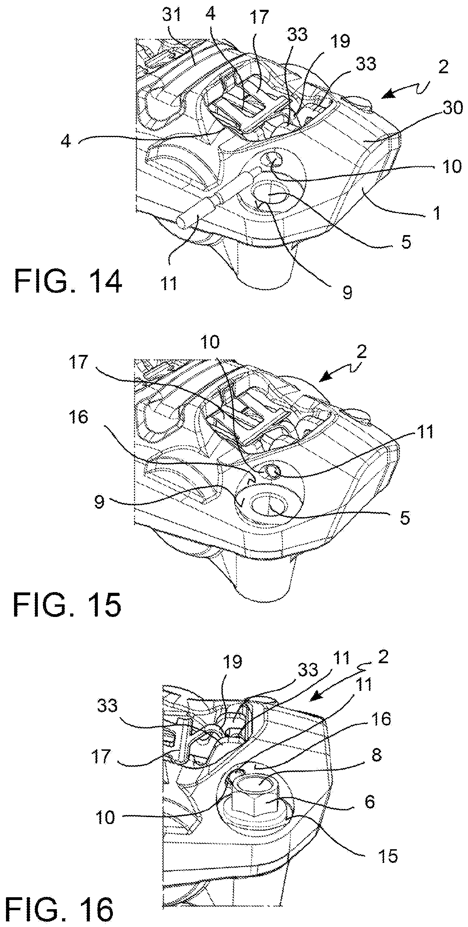

- Figures 14, 15 and 16 show an axonometric view of a portion of the caliper in Figure 4, in three steps of mounting a pin, first including the insertion of the pin into its seat and then the insertion of the connecting screw into its seat so as to obstruct the removal path of the pin.

### . Description of some preferred embodiments

**.** According to a general embodiment, a caliper body 1 of a brake caliper 2 is adapted to house thrust means 3 for urging opposing brake pads 4 against opposite braking surfaces 24, 25 of a brake disc 26 on which said caliper body 1 is adapted to be arranged astride.

**.** Said brake disc 26 defines an axial direction A-A parallel to or coincident with a rotation axis X-X of said brake disc 26, a radial direction R-R orthogonal to said rotation axis X-X, and a circumferential direction C-C which, in each intersection point between said axial direction A-A and said radial direction R-R, is orthogonal to both said axial direction A-A and said radial direction R-R.

**.** Said caliper body 1 comprises at least one screw seat 5 to accommodate a connecting screw 6 for connecting the caliper body 1 to a caliper support 7.

**.** Said screw seat 5 extends along a screw seat direction S-S.

**.** Said connecting screw 6 comprises a screw head 8 to support and tighten the connecting screw 6 and connect said caliper body 1 to said caliper support 7.

**.** Said at least one screw seat 5 is surrounded by a screw head support surface 9 adapted to support said screw head 8 and tighten said connecting screw 6.

**.** Said screw head support surface 9 defines a first screw head support surface extension 12 directed along said screw seat direction S-S.

**.** Said caliper body 1 comprises at least one pin seat 10 adapted to accommodate a brake-pad sliding and support pin 11. Said pin 11 is adapted to support and allow the sliding of opposing brake pads 4. Said pin 11 is extractable to allow the disassembly and replacement of the brake pads 4 when they are worn, for example.

**.** Said at least one pin seat 10 extends along a pin seat direction P-P.

**.** Said at least one pin seat 10 defines a second pin seat extension 13 directed along said pin seat direction P-P.

**.** Said first screw head support surface extension 12 intersects said second pin seat extension 13.

**.** By virtue of the intersection between the first screw head support surface extension 12 and the second pin seat extension 13, certainty can be doubled and it is possible to ensure that the pin 11 does not to come out of its pin seat 10 during the operation of the brake caliper 2. In particular, the invention provides that the function of ensuring that the pin 11 does not come out of its seat 10 is performed by the connecting screw 6 connecting the caliper body 1 to the vehicle.

**.** According to an embodiment, the pin seat 10, on the side opposite to the connecting screw 6, includes a narrowing to allow a widened portion of said pin 11 to abut in its seat and prevent it from coming out of the side of the caliper body opposite to said connecting screw 6.

**.** According to an embodiment, said at least one pin seat 10 opens towards and seamlessly faces said first screw head support surface extension 12 so that when said connecting screw 6 is not accommodated in said at least one screw seat 5, said at least one pin seat 10 can be freely accessed.

**.** According to an embodiment, said at least one screw seat 5 defines a third screw seat extension 14 directed along said screw seat direction S-S.

**.** Said third screw seat extension 14 intersects said second pin seat extension 13.

**.** According to an embodiment, said at least one pin seat 10 is an at least partially cylindrical seat.

**.** Said at least one screw seat 5 is an at least partially cylindrical seat.

**.** According to an embodiment, said screw head support surface 9 is an annular crown.

**.** According to an embodiment, said screw head support surface 9 is obtained in a flattened caliper body portion 15 formed in said caliper body 1 and which forms at least one flattened portion side wall 16, for example resting on a cylindrical extension, which at least partially surrounds said screw head support surface 9.

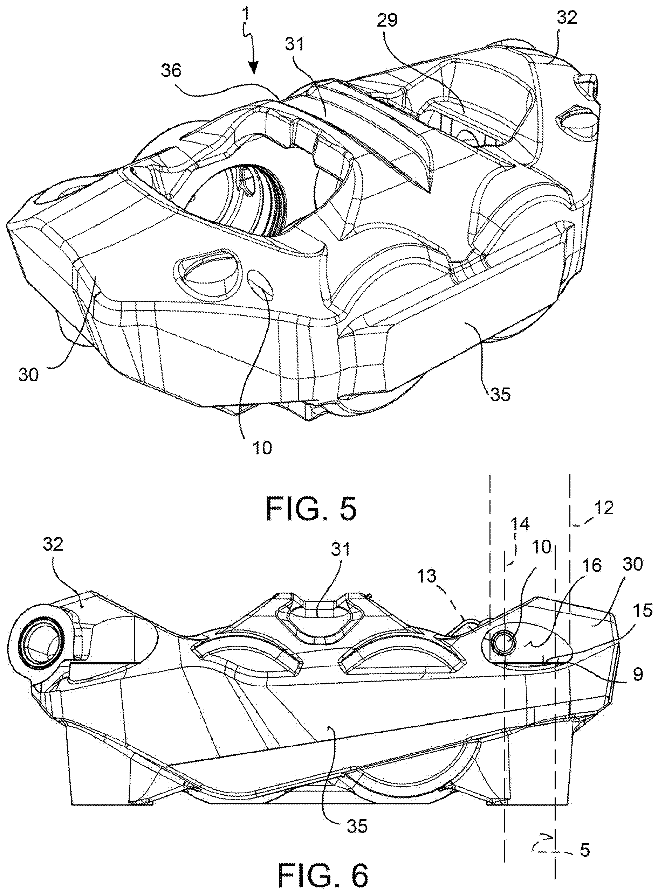

**.** According to an embodiment, looking transversely to a circumferential C-C and radial R-R plane (see Figure 6), the mouth of said at least one pin seat 10 is completely visible without obstructions of portions or components of the caliper body 1. Access to the pin seat 10 is thus free for said pin 11 when the connecting screw 6 is removed, but is impossible when the connecting screw 6 is in its screw seat 5, thus blocking the pin 11 in its pin seat 10.

**.** According to an embodiment, said caliper body 1 is a body made in one piece forming three connection bridges 30, 31, 32 which connect two opposite elongated elements 35, 36, in each of which two seats 22, 23 for thrust means 3 are obtained.

**.** According to an embodiment, said screw seat direction S-S is a radial direction R-R or a direction parallel to a radial direction R-R, preferably the radial direction R-R passing through the centerline of the caliper body 1 or through the thrust center of one of the brake pads 4.

**.** Said pin seat direction P-P is an axial direction A-A or a direction parallel to an axial direction A-A.

**.** The present invention also relates to a brake caliper 2 comprising a caliper body 1 according to any one of the embodiments described above. Opposing brake pads 4 elastically biased by at least one pad spring 17 are accommodated in said brake caliper 2.

**.** Said pads are supported by and slide on at least one brake-pad sliding and support pin 11.

**.** According to an embodiment, said pad spring 17 elastically biases said brake-pad sliding and support pin 11 with an elastic action, for example, an elastic action directed in the radial R-R and/or circumferential C-C direction.

**.** According to an embodiment, said brake-pad sliding and support pin 11 comprises an annular pin seat 18.

**.** Said pad spring 17 comprises a spring portion 19, or tab, at least partially inserted into said annular pin seat 18 so as to counteract excessive movements of said brake-pad sliding and support pin 11 along the axial direction A-A.

**.** According to an embodiment, at least one connecting screw 6 connects said caliper body 1 to a caliper support 7.

**.** According to an embodiment, said connecting screw 6 is a screw stud.

**.** According to an embodiment, said connecting screw 6 comprises a screw head 8.

**.** Said screw head 8 comprises a screw head support and tightening surface 21 which rests against said screw head support surface 9 when the screw is tightened. The screw head 8 thus at least partially intersects said second pin seat extension 13.

**.** According to an embodiment, said screw head 8 comprises grip surfaces 22 for maneuvering said connecting screw 6.

**.** According to an embodiment, said connecting screw 6 comprises a screw shank 20 for the connection with said screw seat 5 and with a caliper support screw seat 23 provided in said caliper support 7.

**.** According to an embodiment, said pad spring 17 is connected to the caliper body 1 and biases said brake pads resting on said caliper body 1 in a circumferential direction C-C and away from the brake disc 26 in the axial direction A-A.

**.** According to an embodiment, said brake pads 4 each comprise a support plate 27.

**.** Said support plate 27 comprises a support arm 28 for supporting said support plate 27 on the pad surface 29 provided in said caliper body 1.

**.** According to an embodiment, said pad surface 29 faces said brake pads 4 and protrudes from an end bridge 30.

**.** According to an embodiment, said brake pads 4 each comprise a support plate 27.

. Said support plate 27 comprises a support fork 33 placed astride said brake-pad sliding and support pin 11.

**.** According to an embodiment, said caliper body 1 comprises plate support elements 34 which are directed radially R-R or according to a direction parallel to a radial direction R-R, for example, passing through the centerline or pressure center of the brake pad 4, adapted to support the support plates 27 and to react to the braking action.

**.** The present invention also relates to a brake caliper assembly comprising a brake caliper 2 according to any one of the embodiments described above, and to a caliper support 7.

**.** Said caliper support 7 comprises at least one caliper support screw seat 23 for accommodating a screw shank 20 of a connecting screw 6 which connects said caliper body 1 to said caliper support 7.

**.** The present invention also relates to a method of mounting brake pads 4 in a caliper body 1.

**.** This method comprises at least the following steps:
- providing a brake caliper 2 as defined in any one of the embodiments described above;
- with the caliper body 1 disassembled, connecting said pad spring 17 to said caliper body 1;
- with the caliper body 1 disassembled, inserting the brake pads 4 into the caliper body 1 so as to engage the support arm 28 thereof to said pad surface 29;
- inserting said brake-pad sliding and support pin 11 into said pin seat 10 by positioning the support forks 33 astride said pin 11 and at least partially inserting said spring portion 19 into said annular pin seat 18;
- inserting said connecting screw 6 into said screw seat 5, thus at least partially obstructing access to said pin 18 so that the screw head 8 at least partially intersects said second pin seat extension 13.

### LIST OF REFERENCE SIGNS

- 1: caliper body
- 2: brake caliper
- 3: thrust means
- 4: brake pad
- 5: screw seat
- 6: connecting screw
- 7: caliper support
- 8: screw head
- 9: screw head support surface
- 10: pin seat
- 11: brake-pad sliding and support pin
- 12: first screw head support surface extension
- 13: second pin seat extension
- 14: third screw seat extension
- 15: flattened caliper body portion
- 16: flattened portion side wall
- 17: pad spring
- 18: annular pin seat
- 19: spring portion or tab
- 20: screw shank
- 21: screw head support and tightening surface
- 22: grip surfaces
- 23: caliper support screw seat
- 24: braking surface
- 25: braking surface
- 26: brake disc
- 27: support plate
- 28: support arm
- 29: pad surface
- 30: end bridge
- 31: intermediate bridge
- 32: end bridge
- 33: support fork
- 34: plate support element
- 35: elongated caliper body element
- 36: elongated caliper body element
- A-A: axial direction
- X-X: rotation axis
- R-R: radial direction
- C-C: circumferential direction
- P-P: pin seat direction
- S-S: screw seat direction

## Claims

1. A caliper body (1) of a brake caliper (2) adapted to house thrust means (3) for urging opposing brake pads (4) against opposite braking surfaces (24, 25) of a brake disc (26) on which said caliper body (1) is adapted to be arranged astride;
said brake disc (26) defining an axial direction (A-A) parallel to or coincident with a rotation axis (X-X) of said brake disc (26), a radial direction (R-R) orthogonal to said rotation axis (X-X) and a circumferential direction (C-C) which, in each intersection point between said axial direction (A-A) and said radial direction (R-R), is orthogonal to both said axial direction (A-A) and said radial direction (R-R); wherein
said caliper body (1) comprises at least one screw seat (5) to accommodate a connecting screw (6) for connecting the caliper body (1) to a caliper support (7); said screw seat (5) extends along a screw seat direction (S-S); said connecting screw (6) comprises a screw head (8) to support and tighten the connecting screw (6) by connecting said caliper body (1) to said caliper support (7);
said at least one screw seat (5) is surrounded by a screw head support surface (9) adapted to support said screw head (8) and tighten said connecting screw (6);
said caliper body (1) comprises at least one pin seat (10) adapted to accommodate a brake-pad sliding and support pin (11), which pin is adapted to support and allow the sliding said opposite brake pads (4); said at least one pin seat (10) extends along a pin seat direction (P-P);
said screw head support surface (9) defines a first screw head support surface extension (12) directed along said screw seat direction (S-S);
said at least one pin seat (10) defines a second pin seat extension (13) directed along said pin seat direction (P-P);
**characterized in that**
said first screw head support surface extension (12) intersects said second pin seat extension (13).

2. A caliper body (1) according to claim 1, wherein
said at least one pin seat (10) opens towards and seamlessly faces said first screw head support surface extension (12) so that, when said connecting screw (6) is not accommodated in said at least one screw seat (5), said at least one pin seat (10) can be freely accessed;
and/or wherein
said at least one screw seat (5) defines a third screw head extension (14) directed along said screw seat direction (S-S);
said third screw seat extension (14) intersects said second pin seat extension (13).

3. A caliper body (1) according to any one of the preceding claims, wherein
said at least one pin seat (10) is an at least partially cylindrical seat; and wherein
said at least one screw seat (5) is an at least partially cylindrical seat; and wherein
said screw head support surface (9) is an annular crown;
and/or wherein
said screw head support surface (9) is obtained in a flattened caliper body portion (15) formed in said caliper body (1) and which forms at least one flattened portion side wall (16) which at least partially surrounds said screw head support surface (9);
and/or wherein
looking at said at least one pin seat (10) transversely to a circumferential (C-C) and radial (R-R) plane, said at least one pin seat (10) is completely visible without obstructions of portions or components of the caliper body (1).

4. A caliper body (1) according to any one of the preceding claims, wherein
said caliper body (1) is a body made in one piece forming three connection bridges (30, 31, 32) which connect two opposite elongated elements (35, 36) in each of which two seats (22, 23) for thrust means (3) are obtained;
and/or wherein
said screw seat direction (S-S) is a radial direction (R-R) or a direction parallel to a radial direction (R-R), preferably the radial direction (R-R) passing through the centerline of the caliper body (1) or through the thrust center of one of the brake pads (4); and wherein
said pin seat direction (P-P) is an axial direction (A-A) or a direction parallel to an axial direction (A-A).

5. A brake caliper (2) comprising a caliper body (1) according to any one of the preceding claims, wherein opposing brake pads (4) are accommodated, elastically biased by at least one pad spring (17), wherein said pads are supported by and slide on at least one brake-pad sliding and support pin (11).

6. A brake caliper (2) according to claim 5, wherein
said pad spring (17) elastically biases said brake-pad sliding and support pin (11) with an elastic action, preferably an elastic action directed in the radial (R-R) and/or circumferential (C-C) direction.

7. A brake caliper (2) according to claim 5 or 6, wherein
said brake-pad sliding and support pin (11) comprises an annular pin seat (18); and wherein
said pad spring (17) comprises a spring portion (19) at least partially inserted into said annular pin seat (18) so as to counteract excessive movements of said brake-pad sliding and support pin (11) along the axial direction (A-A).

8. A brake caliper (2) according to any one of claims 5 to 7, wherein
at least one connecting screw (6) connects said caliper body (1) to a caliper support (7);
and/or wherein
said connecting screw (6) is a screw stud.

9. A brake caliper (2) according to claim 8, wherein
said connecting screw (6) comprises a screw head (8); wherein
said screw head (8) comprises a screw head support and tightening surface (21) which, when the screw is tightened, rests against said screw head support surface (9); wherein the screw head (8) at least partially intersects said second pin seat extension (13); and/or wherein
said screw head (8) comprises grip surfaces (22) for maneuvering said connecting screw (6).

10. A brake caliper (2) according to any one of claims 8 to 9, wherein
said connecting screw (6) comprises a screw shank (20) for the connection with said screw seat (5) and with a caliper support screw seat (23) provided in said caliper support (7).

11. A brake caliper (2) according to any one of claims 5 to 10, wherein
said pad spring (17) is connected to the caliper body (1) and biases said brake pads resting on said caliper body (1) in a circumferential direction (C-C) and away from the brake disc (26) in the axial direction (A-A).

12. A brake caliper (2) according to any one of claims 5 to 11, wherein
said brake pads (4) each comprise a support plate (27); and wherein said support plate (27) comprises a support arm (28) for supporting said support plate (27) on the pad surface (29) provided in said caliper body (1) facing said brake pads (4) and protruding from an end bridge (30);
and/or
said brake pads (4) each comprise a support plate (27); and wherein said support plate (27) comprises a support fork (33) placed astride said brake-pad sliding and support pin (11).

13. A brake caliper (2) according to any one of claims 5 to 12, wherein
said caliper body (1) comprises plate support elements (34) which are directed radially (R-R) or according to a direction parallel to a radial direction (R-R), preferably passing through the centerline or pressure center of the brake pad (4), adapted to support the support plates (27) and to react to the braking action.

14. A brake caliper assembly comprising a brake caliper (2) according to any one of claims 5 to 13 and a caliper support (7), wherein said caliper support (7) comprises at least one caliper support screw seat (23) for accommodating a screw shank (20) of a connecting screw (6) which connects said caliper body (1) to said caliper support (7).

15. A method of mounting brake pads (4) in a caliper body (1), comprising the steps of:
- providing a brake caliper (2) according to any one of claims 5 to 14;
- with the caliper body (1) disassembled, connecting said pad spring (17) to said caliper body (1);
- with the caliper body (1) disassembled, inserting the brake pads (4) into the caliper body (1) so as to engage the support arm (28) thereof to said pad surface (29);
- inserting said brake-pad sliding and support pin (11) into said pin seat (10) by positioning the support forks (33) astride said pin (11) and at least partially inserting said spring portion (19) into said annular pin seat (18);
- inserting said connecting screw (6) into said screw seat (5), thus at least partially obstructing access to said pin (18) so that the screw head (8) at least partially intersects said second pin seat extension (13).

## Patentansprüche

1. Bremssattelkörper (1) eines Bremssattels (2), der dazu ausgelegt ist, Druckmittel (3) aufzunehmen, um gegenüberliegende Bremsbeläge (4) gegen gegenüberstehende Bremsflächen (24, 25) einer Bremsscheibe (26) zu drücken, auf der der Bremssattelkörper (1) dazu ausgelegt ist, rittlings angeordnet zu sein;
wobei die Bremsscheibe (26) eine axiale Richtung (A-A), die parallel zu oder deckungsgleich mit einer Drehachse (X-X) der Bremsscheibe (26) ist, eine radiale Richtung (R-R), die senkrecht zu der Drehachse (X-X) ist, und eine Umfangsrichtung (C-C) definiert, die an jedem Schnittpunkt zwischen der axialen Richtung (A-A) und der radialen Richtung (R-R) sowohl zur axialen Richtung (A-A) als auch zur radialen Richtung (R-R) senkrecht ist; wobei
der Bremssattelkörper (1) mindestens einen Schraubensitz (5) umfasst, um eine Verbindungsschraube (6) zur Verbindung des Bremssattelkörpers (1) mit einer Bremssattelstütze (7) aufzunehmen; sich der Schraubensitz (5) entlang einer Schraubensitzrichtung (S-S) erstreckt; die Verbindungsschraube (6) einen Schraubenkopf (8) umfasst, um die Verbindungsschraube (6) durch Verbinden des Bremssattelkörpers (1) mit der Bremssattelstütze (7) abzustützen und festzuziehen;
der mindestens eine Schraubensitz (5) von einer Schraubenkopfstützfläche (9) umgeben ist, die dazu ausgelegt ist, den Schraubenkopf (8) abzustützen und die Verbindungsschraube (6) festzuziehen;
der Bremssattelkörper (1) mindestens einen Bolzensitz (10) umfasst, der dazu ausgelegt ist, einen Bremsbelag-Gleit- und Stützbolzen (11) aufzunehmen, wobei der Bolzen dazu ausgelegt ist, die gegenüberstehenden Bremsbeläge (4) abzustützen und deren Gleiten zu ermöglichen; sich der mindestens eine Bolzensitz (10) entlang einer Bolzensitzrichtung (P-P) erstreckt;
die Schraubenkopfstützfläche (9) eine erste Schraubenkopfstützflächenverlängerung (12) definiert, die entlang der Schraubensitzrichtung (S-S) ausgerichtet ist;
der mindestens eine Bolzensitz (10) eine zweite Bolzensitzverlängerung (13) definiert, die entlang der Bolzensitzrichtung (P-P) ausgerichtet ist;
**dadurch gekennzeichnet, dass**
die erste Schraubenkopfstützflächenverlängerung (12) die zweite Bolzensitzverlängerung (13) schneidet.

2. Bremssattelkörper (1) nach Anspruch 1, wobei der mindestens eine Bolzensitz (10) sich zur ersten Schraubenkopfstützflächenverlängerung (12) hin öffnet und nahtlos an diese angrenzt, sodass, wenn die Verbindungsschraube (6) nicht in dem mindestens einen Schraubensitz (5) aufgenommen ist, der mindestens eine Bolzensitz (10) frei zugänglich ist; und/oder wobei
der mindestens eine Schraubensitz (5) eine dritte Schraubenkopfverlängerung (14) definiert, die entlang der Schraubensitzrichtung (S-S) ausgerichtet ist;
die dritte Schraubensitzverlängerung (14) die zweite Bolzensitzverlängerung (13) schneidet.

3. Bremssattelkörper (1) nach einem der vorhergehenden Ansprüche, wobei
der mindestens eine Bolzensitz (10) ein zumindest teilweise zylindrischer Sitz ist; und wobei
der mindestens eine Schraubensitz (5) ein zumindest teilweise zylindrischer Sitz ist; und wobei
die Schraubenkopfstützfläche (9) eine ringförmige Krone ist; und/oder wobei
die Schraubenkopfstützfläche (9) in einem abgeflachten Bremssattelkörperabschnitt (15) ausgebildet ist, der in dem Bremssattelkörper (1) gebildet ist und der mindestens einen abgeflachten Seitenwandabschnitt (16) bildet, der die Schraubenkopfstützfläche (9) zumindest teilweise umgibt; und/oder wobei
wenn der mindestens eine Bolzensitz (10) quer zu einer Umfangs-(C-C) und einer radialen (R-R) Ebene betrachtet wird, der mindestens eine Bolzensitz (10) vollständig sichtbar ist, ohne dass Abschnitte oder Komponenten des Bremssattelkörpers (1) die Sicht behindern.

4. Bremssattelkörper (1) nach einem der vorhergehenden Ansprüche, wobei
der Bremssattelkörper (1) als einteiliger Körper gefertigt ist, der drei Verbindungsbrücken (30, 31, 32) bildet, die zwei gegenüberstehende längliche Elemente (35, 36) verbinden, in denen jeweils zwei Sitze (22, 23) für Druckmittel (3) ausgebildet sind;
und/oder wobei
die Schraubensitzrichtung (S-S) eine radiale Richtung (R-R) oder eine Richtung parallel zu einer radialen Richtung (R-R) ist, wobei die radiale Richtung (R-R) vorzugsweise durch die Mittellinie des Bremssattelkörpers (1) oder durch den Druckmittelpunkt eines der Bremsbeläge (4) verläuft; und wobei die Bolzensitzrichtung (P-P) eine axiale Richtung (A-A) oder eine Richtung parallel zu einer axialen Richtung (A-A) ist.

5. Bremssattel (2), der einen Bremssattelkörper (1) nach einem der vorhergehenden Ansprüche umfasst, wobei gegenüberliegende Bremsbeläge (4) aufgenommen sind, die durch mindestens eine Belagfeder (17) elastisch vorgespannt sind, wobei die Beläge von mindestens einem Bremsbelag-Gleit- und Stützbolzen (11) abgestützt werden und auf diesem gleiten.

6. Bremssattel (2) nach Anspruch 5, wobei
die Belagfeder (17) den Bremsbelag-Gleit- und Stützbolzen (11) durch eine elastische Kraft elastisch vorspannt, vorzugsweise durch eine in radialer (R-R) und/oder Umfangsrichtung (C-C) gerichtete elastische Kraft.

7. Bremssattel (2) nach Anspruch 5 oder 6, wobei
der Bremsbelag-Gleit- und Stützbolzen (11) einen ringförmigen Bolzensitz (18) umfasst; und wobei
die Belagfeder (17) einen Federabschnitt (19) umfasst, der zumindest teilweise in den ringförmigen Bolzensitz (18) eingesetzt ist, um übermäßigen Bewegungen des Bremsbelag-Gleit-und Stützbolzens (11) entlang der axialen Richtung (A-A) entgegenzuwirken.

8. Bremssattel (2) nach einem der Ansprüche 5 bis 7, wobei
mindestens eine Verbindungsschraube (6) den Bremssattelkörper (1) mit einer Bremssattelstütze (7) verbindet;
und/oder wobei
die Verbindungsschraube (6) eine Stiftschraube ist.

9. Bremssattel (2) nach Anspruch 8, wobei
die Verbindungsschraube (6) einen Schraubenkopf (8) umfasst; wobei
der Schraubenkopf (8) eine Schraubenkopfstütz- und Festziehfläche (21) umfasst, die beim Festziehen der Schraube an der Schraubenkopfstützfläche (9) anliegt; wobei der Schraubenkopf (8) die zweite Bolzensitzverlängerung (13) zumindest teilweise schneidet; und/oder wobei
der Schraubenkopf (8) Griffflächen (22) zum Handhaben der Verbindungsschraube (6) umfasst.

10. Bremssattel (2) nach einem der Ansprüche 8 bis 9, wobei die Verbindungsschraube (6) einen Schraubenschaft (20) zur Verbindung mit dem Schraubensitz (5) und mit einem in der Bremssattelstütze (7) vorgesehenen Bremssattelstützenschraubensitz (23) umfasst.

11. Bremssattel (2) nach einem der Ansprüche 5 bis 10, wobei die Bremsbelagfeder (17) mit dem Bremssattelkörper (1) verbunden ist und die auf dem Bremssattelkörper (1) aufliegenden Bremsbeläge in einer Umfangsrichtung (C-C) und in axialer Richtung (A-A) von der Bremsscheibe (26) weg vorspannt.

12. Bremssattel (2) nach einem der Ansprüche 5 bis 11, wobei
die Bremsbeläge (4) jeweils eine Stützplatte (27) umfassen; und wobei die Stützplatte (27) einen Stützarm (28) umfasst, um die Stützplatte (27) auf der Belagfläche (29) abzustützen, die in dem Bremssattelkörper (1) den Bremsbelägen (4) zugewandt vorgesehen ist und aus einer Endbrücke (30) hervorsteht; und/oder
die Bremsbeläge (4) jeweils eine Stützplatte (27) umfassen; und wobei die Stützplatte (27) eine Stützgabel (33) umfasst, die rittlings auf dem Bremsbelag-Gleit- und Stützbolzen (11) angeordnet ist.

13. Bremssattel (2) nach einem der Ansprüche 5 bis 12, wobei der Bremssattelkörper (1) Plattenstützelemente (34) umfasst, die radial (R-R) oder in einer zu der radialen Richtung (R-R) parallelen Richtung ausgerichtet sind, vorzugsweise durch die Mittellinie oder den Druckmittelpunkt des Bremsbelags (4) verlaufen und dazu ausgelegt sind, die Stützplatten (27) abzustützen und auf die Bremskraft zu reagieren.

14. Bremssattelanordnung, die einen Bremssattel (2) nach einem der Ansprüche 5 bis 13 und eine Bremssattelstütze (7) umfasst, wobei die Bremssattelstütze (7) mindestens einen Bremssattelstützenschraubensitz (23) zur Aufnahme eines Schraubenschafts (20) einer Verbindungsschraube (6) umfasst, die den Bremssattelkörper (1) mit der Bremssattelstütze (7) verbindet.

15. Verfahren zum Montieren von Bremsbelägen (4) in einen Bremssattelkörper (1), umfassend die Schritte:
- Bereitstellen eines Bremssattels (2) nach einem der Ansprüche 5 bis 14;
- bei zerlegtem Bremssattelkörper (1), Verbinden der Belagfeder (17) mit dem Bremssattelkörper (1);
- bei zerlegtem Bremssattelkörper (1), Einsetzen der Bremsbeläge (4) in den Bremssattelkörper (1), sodass deren Stützarm (28) an der Belagfläche (29) eingreift;
- Einsetzen des Bremsbelag-Gleit- und Stützbolzens (11) in den Bolzensitz (10), indem die Stützgabeln (33) rittlings auf dem Bolzen (11) positioniert werden und der Federabschnitt (19) zumindest teilweise in den ringförmigen Bolzensitz (18) eingesetzt wird;
- Einsetzen der Verbindungsschraube (6) in den Schraubensitz (5), wodurch der Zugang zu dem Bolzen (18) zumindest teilweise behindert wird, sodass der Schraubenkopf (8) die zweite Bolzensitzverlängerung (13) zumindest teilweise schneidet.

## Revendications

1. Corps d'étrier (1) d'un étrier de frein (2) adapté pour loger des moyens de poussée (3) pour pousser les plaquettes de frein opposées (4) contre les surfaces de freinage opposées (24, 25) d'un disque de frein (26) sur lequel ledit corps d'étrier (1) est adapté pour être disposé à cheval ;
ledit disque de frein (26) définissant une direction axiale (A-A) parallèle à ou coïncidant avec un axe de rotation (X-X) dudit disque de frein (26), une direction radiale (R-R) orthogonale audit axe de rotation (X-X) et une direction circonférentielle (C-C) qui, dans chaque point de croisement entre ladite direction axiale (A-A) et ladite direction radiale (R-R), est orthogonale à la fois à ladite direction axiale (A-A) et à ladite direction radiale (R-R) ; dans lequel
ledit corps d'étrier (1) comprend au moins un siège de vis (5) pour recevoir une vis de liaison (6) pour relier le corps d'étrier (1) à un support d'étrier (7) ; ledit siège de vis (5) s'étend le long d'une direction de siège de vis (S-S) ; ladite vis de liaison (6) comprend une tête de vis (8) pour supporter et serrer la vis de liaison (6) en reliant ledit corps d'étrier (1) audit support d'étrier (7) ;
ledit au moins un siège de vis (5) est entouré d'une surface de support de tête de vis (9) adaptée pour supporter ladite tête de vis (8) et serrer ladite vis de liaison (6) ;
ledit corps d'étrier (1) comprend au moins un siège de goupille (10) adapté pour recevoir une goupille de coulissement et de support de plaquette de frein (11), laquelle goupille est adaptée pour supporter et permettre le coulissement desdites plaquettes de frein opposées (4) ; ledit au moins un siège de goupille (10) s'étend le long d'une direction de siège de goupille (P-P) ;
ladite surface de support de tête de vis (9) définit une première extension de surface de support de tête de vis (12) dirigée le long de ladite direction de siège de vis (S-S) ;
ledit au moins un siège de goupille (10) définit une deuxième extension de siège de goupille (13) dirigée le long de ladite direction de siège de goupille (P-P) ;
**caractérisé en ce que**
ladite première extension de surface de support de tête de vis (12) croise ladite deuxième extension de siège de goupille (13).

2. Corps d'étrier (1) selon la revendication 1, dans lequel
ledit au moins un siège de goupille (10) s'ouvre vers et fait face sans interruption à ladite première extension de surface de support de tête de vis (12) de sorte que, lorsque ladite vis de liaison (6) n'est pas logée dans ledit au moins un siège de vis (5), ledit au moins un siège de goupille (10) peut être librement accessible ;
et/ou dans lequel
ledit au moins un siège de vis (5) définit une troisième extension de tête de vis (14) dirigée le long de ladite direction de siège de vis (S-S) ;
ladite troisième extension de siège de vis (14) croise ladite deuxième extension de siège de goupille (13).

3. Corps d'étrier (1) selon l'une quelconque des revendications précédentes, dans lequel
ledit au moins un siège de goupille (10) est un siège au moins partiellement cylindrique ; et dans lequel
ledit au moins un siège de vis (5) est un siège au moins partiellement cylindrique ; et dans lequel
ladite surface de support de tête de vis (9) est une couronne annulaire ;
et/ou dans lequel
ladite surface de support de tête de vis (9) est obtenue dans une partie de corps d'étrier aplatie (15) formée dans ledit corps d'étrier (1) et qui forme au moins une paroi latérale de partie aplatie (16) qui entoure au moins partiellement ladite surface de support de tête de vis (9) ;
et/ou dans lequel
en regardant ledit au moins un siège de goupille (10) transversalement à un plan circonférentiel (C-C) et radial (R-R), ledit au moins un siège de goupille (10) est complètement visible sans obstruction de parties ou de composants du corps d'étrier (1).

4. Corps d'étrier (1) selon l'une quelconque des revendications précédentes, dans lequel
ledit corps d'étrier (1) est un corps fait d'une seule pièce formant trois ponts de liaison (30, 31, 32) qui relient deux éléments allongés opposés (35, 36) dans chacun desquels on obtient deux sièges (22, 23) pour des moyens de poussée (3) ; et/ou dans lequel
ladite direction de siège de vis (S-S) est une direction radiale (R-R) ou une direction parallèle à une direction radiale (R-R), de préférence la direction radiale (R-R) passant par la ligne médiane du corps d'étrier (1) ou par le centre de poussée de l'une des plaquettes de frein (4) ; et dans lequel ladite direction de siège de goupille (P-P) est une direction axiale (A-A) ou une direction parallèle à une direction axiale (A-A).

5. Étrier de frein (2) comprenant un corps d'étrier (1) selon l'une quelconque des revendications précédentes, dans lequel des plaquettes de frein opposées (4) sont logées, sollicitées élastiquement par au moins un ressort de plaquette (17), dans lequel lesdites plaquettes sont supportées par et coulissent sur au moins une goupille de coulissement et de support de plaquette de frein (11).

6. Étrier de frein (2) selon la revendication 5, dans lequel ledit ressort de plaquette (17) sollicite élastiquement ladite goupille de coulissement et de support de plaquette de frein (11) avec une action élastique, de préférence une action élastique dirigée dans la direction radiale (R-R) et/ou circonférentielle (C-C).

7. Étrier de frein (2) selon la revendication 5 ou 6, dans lequel
ladite goupille de coulissement et de support de plaquette de frein (11) comprend un siège de goupille annulaire (18) ; et dans lequel
ledit ressort de plaquette (17) comprend une partie de ressort (19) au moins partiellement insérée dans ledit siège de goupille annulaire (18) de manière à contrer les mouvements excessifs de ladite goupille de coulissement et de support de plaquette de frein (11) le long de la direction axiale (A-A).

8. Étrier de frein (2) selon l'une quelconque des revendications 5 à 7, dans lequel
au moins une vis de liaison (6) relie ledit corps d'étrier (1) à un support d'étrier (7) ;
et/ou dans lequel
ladite vis de liaison (6) est un goujon de vis.

9. Étrier de frein (2) selon la revendication 8, dans lequel ladite vis de liaison (6) comprend une tête de vis (8) ; dans lequel
ladite tête de vis (8) comprend une surface de support et de serrage de tête de vis (21) qui, lorsque la vis est serrée, repose contre ladite surface de support de tête de vis (9) ; dans lequel la tête de vis (8) croise au moins partiellement ladite deuxième extension de siège de goupille (13) ; et/ou dans lequel
ladite tête de vis (8) comprend des surfaces de préhension (22) pour manœuvrer ladite vis de liaison (6).

10. Étrier de frein (2) selon l'une quelconque des revendications 8 à 9, dans lequel
ladite vis de liaison (6) comprend une tige de vis (20) pour la liaison avec ledit siège de vis (5) et avec un siège de vis de support d'étrier (23) prévu dans ledit support d'étrier (7).

11. Étrier de frein (2) selon l'une quelconque des revendications 5 à 10, dans lequel
ledit ressort de plaquette (17) est relié au corps d'étrier (1) et sollicite lesdites plaquettes de frein reposant sur ledit corps d'étrier (1) dans une direction circonférentielle (C-C) et à l'écart du disque de frein (26) dans la direction axiale (A-A).

12. Étrier de frein (2) selon l'une quelconque des revendications 5 à 11, dans lequel
lesdites plaquettes de frein (4) comprennent chacune une plaque de support (27) ; et dans lequel ladite plaque de support (27) comprend un bras de support (28) pour supporter ladite plaque de support (27) sur la surface de plaquette (29) prévue dans ledit corps d'étrier (1) faisant face auxdites plaquettes de frein (4) et faisant saillie à partir d'un pont d'extrémité (30) ;
et/ou
lesdites plaquettes de frein (4) comprennent chacune une plaque de support (27) ; et dans lequel ladite plaque de support (27) comprend une fourche de support (33) placée à cheval sur ladite goupille de coulissement et de support de plaquette de frein (11).

13. Étrier de frein (2) selon l'une quelconque des revendications 5 à 12, dans lequel
ledit corps d'étrier (1) comprend des éléments de support de plaque (34) qui sont dirigés radialement (R-R) ou selon une direction parallèle à une direction radiale (R-R), passant de préférence par la ligne médiane ou le centre de pression de la plaquette de frein (4), adaptés pour supporter les plaques de support (27) et pour réagir à l'action de freinage.

14. Ensemble d'étrier de frein comprenant un étrier de frein (2) selon l'une quelconque des revendications 5 à 13 et un support d'étrier (7), dans lequel ledit support d'étrier (7) comprend au moins un siège de vis de support d'étrier (23) pour loger une tige de vis (20) d'une vis de liaison (6) qui relie ledit corps d'étrier (1) audit support d'étrier (7).

15. Procédé de montage de plaquettes de frein (4) dans un corps d'étrier (1), comprenant les étapes suivantes :
- prévoir un étrier de frein (2) selon l'une quelconque des revendications 5 à 14 ;
- avec le corps d'étrier (1) démonté, relier ledit ressort de plaquette (17) audit corps d'étrier (1) ;
- avec le corps d'étrier (1) démonté, insérer les plaquettes de frein (4) dans le corps d'étrier (1) de manière à engager le bras de support (28) de celui-ci sur ladite surface de plaquette (29) ;
- insérer ladite goupille de coulissement et de support de plaquette de frein (11) dans ledit siège de goupille (10) en positionnant les fourches de support (33) à cheval sur ladite goupille (11) et en insérant au moins partiellement ladite partie de ressort (19) dans ledit siège de goupille annulaire (18) ;
- insérer ladite vis de liaison (6) dans ledit siège de vis (5), obstruant ainsi au moins partiellement l'accès à ladite goupille (18) de sorte que la tête de vis (8) croise au moins partiellement ladite deuxième extension de siège de goupille (13).
